**Europäisches Patentamt**

**European Patent Office**

**Office européen des brevets**

(11) Veröffentlichungsnummer: **0 154 790**
**B1**

(12) # EUROPÄISCHE PATENTSCHRIFT

(45) Veröffentlichungstag der Patentschrift:
**29.06.88**

(51) Int. Cl.⁴: **B 27 C 3/06**

(21) Anmeldenummer: **85100928.2**

(22) Anmeldetag: **30.01.85**

---

(54) **Bohrmaschine für die Möbelherstellung.**

---

(30) Priorität: **09.02.84 AT 412/84**
**27.08.84 AT 2725/84**

(43) Veröffentlichungstag der Anmeldung:
**18.09.85 Patentblatt 85/38**

(45) Bekanntmachung des Hinweises auf die Patenterteilung:
**29.06.88 Patentblatt 88/26**

(84) Benannte Vertragsstaaten:
**BE DE FR GB IT SE**

(56) Entgegenhaltungen:
**AT-B-311 029**
**AT-B-340 675**
**US-A-1 633 752**
**US-A-2 633 165**

(73) Patentinhaber: **Julius Blum Gesellschaft m.b.H.,**
**Industriestrasse 1, A-6973 Höchst (AT)**

(72) Erfinder: **Blum, Dietmar, Kneippstrasse 4, A-6973**
**Höchst (AT)**

(74) Vertreter: **Torggler, Paul, Dr., Wilhelm- Greil-**
**Strasse 16, A-6020 Innsbruck (AT)**

## Beschreibung

Die Erfindung bezieht sich auf eine Bohrmaschine für die Möbelherstellung zum Bohren von Bohrlöchern, zum Einsetzen von Dübeln, Scharniertöpfen u.dgl., mit einem Maschinenrahmen, an dem ein Antriebsmotor und ein Getriebeblock für mehrere Bohrspindeln gelagert sind, sowie einer Vorschubeinrichtung, wobei im Getriebeblock ein um eine Achse, die parallel zu den Achsen der Bohrspindeln verläuft, drehbarer zylindrischer Bohrspindelträger mit zentrischem Antriebsritzel gelagert ist, bei der der Bohrspindelträger in den Getriebeblock eingeschoben und mit einem Ring gesichert ist und wobei der Bohrspindelträger an seinem Mantel von einem Arretierbolzen im Getriebeblock festlegbar ist.

Insbesondere in der industriellen Möbelherstellung sind sogenannte Bohrautomaten bekannt, die Bohrbalken mit Bohrspindelreihen aufweisen, mittels denen plattenförmige Möbelbauteile flachseitig oder auch stirnseitig angebohrt werden können. Teilweise sind die Bohrbalken schwenkbar gelagert. In den Bohrreihen sind die Bohrer im allgemeinen mit einem Abstand von 32 mm, dem sogenannten Systemabstand, voneinander angeordnet.

Es sind weiters Bohrmaschinen bekannt, die insbesondere beim gewerblichen Tischler Verwendung finden, bei denen ein Elektromotor, der mit einem Bohrgetriebe, das mehrere Spindeln aufweist, versehen ist, in einem Trägerrahmen lagert und zur Bohrstelle gedrückt und von dieser abgehoben werden kannn.

Die US-PS-1 633 752 beschreibt eine Bohrmaschine der eingangs erwähnten Art, bei der fünf Bohrspindeln im Kreis angeordnet sind. Mit dieser Bohrmaschine können zwei oder mehr Bohrungen gleichzeitig gebohrt und dieser Vorgang kann genau wiederholt werden.

Aufgabe der Erfindung ist es, eine Bohrmaschine zu schaffen, die insbesondere für den Einsatz im gewerblichen Bereich geeignet ist, und mit der insbesondere Bohrungen für Scharniertöpfe und Scharnierarmgrundplatten moderner Scharniere durchgeführt werden können, als auch Bohrungen, die entlang der Systemreihe angeordnet sind, wie sie beispielsweise zum Einsetzen von Möbelverbindern und Dübeln gebohrt werden müssen. Ein rasches und einfaches Umrüsten soll möglich sein.

Das Getriebe der Bohrmaschine soll sich weiters durch gute Laufruhe auszeichnen und gegenüber herkömmlichen Getrieben weniger Schmierfett benötigen.

Die erfindungsgemäße Aufgabe wird dadurch gelöst, daß im Bohrspindelträger Bohrspindeln in einer Spindelreihe sind, die in einer Axialebene des Bohrspindelträgers liegen und Bohrspindeln in einer zweiten Spindelreihe, die sich in einer Ebene befindet, die senkrecht zur ersten und im Abstand von der Drehachse des Bohrspindelträgers liegt und daß der Bohrspindelträger an seinem Mantel mit mindestens zwei, vorzugsweise vier Einraststellen versehen ist, die zueinander um 90° versetzt sind und in denen wahlweise der Arretierbolzen, der die Drehung des Bohrspindelträgers verhindert, einrastet.

Vorteilhaft ist vorgesehen, daß der Bohrspindelträger eine obere und eine untere Abdeckplatte aufweist, zwischen denen eine Distanzscheibe angeordnet ist, deren Breite der Höhe des Bohrspindelhalters und deren Durchmesser dem Durchmesser des Bohrspindelhalters entspricht, und die mindestens eine Ausnehmung aufweist, in der die Getrieberitzel angeordnet sind, wobei die Kontur der Ausnehmung mindestens teilweise mit der Kontur eines oder mehrerer Getrieberitzel übereinstimmt.

Die Distanzscheibe ist vorteilhaft aus Kunststoff, während Zink ein geeignetes Material für die Abdeckplatten ist. Die Kontur der Ausnehmung wird von Kreisen beschrieben, die einander schneiden.

Das Paket Abdeckplatten und Distanzscheibe wird von Gewindebolzen zusammengehalten.

Ein Ausführungsbeispiel der Erfindung sieht vor, daß an einer Abdeckplatte oder der Distanzscheibe ein Hebel befestigt ist, mittels dem der Bohrspindelhalter um seine Längsmittelachse im Getriebeblock um 90° verdrehbar ist.

Bei diesem Ausführungsbeispiel können beispielsweise drei Bohrspindeln im 32 mm - Abstand entlang dem Durchmesser des Bohrspindelhalters angeordnet sein. Mit diesen Bohrern lassen sich entweder Bohrungen für die Scharnierarmgrundplatte bohren, oder wenn der Bohrspindelhalter um 90° verdreht wird, Bohrlöcher, die entlang der Kante des plattenförmigen Bauteiles in der üblichen Systemreihe verlaufen.

Mit den im Abstand vom Durchmesser befindlichen beiden Bohrspindeln bzw. Bohrern, die die zweite Bohrspindelreihe bilden, und dem mittleren Bohrer der ersten Reihe, können in einem Arbeitsgang die drei Bohrungen für einen Scharniertopf mit Abdeckflansch und zwei auslegerartig angeordneten Dübeln gebohrt werden.

Ein derartiger Scharniertopf ist beispielsweise in der DE-OS-2 926 486 gezeigt.

Nachfolgend wird ein Ausführungsbeispiel der Erfindung anhand der Figuren der beiliegenden Zeichnungen beschrieben.

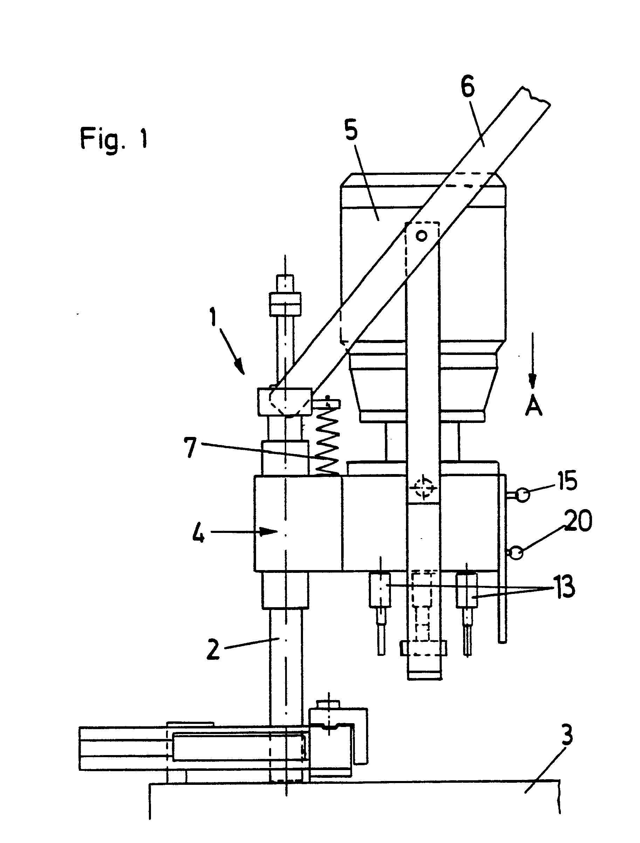

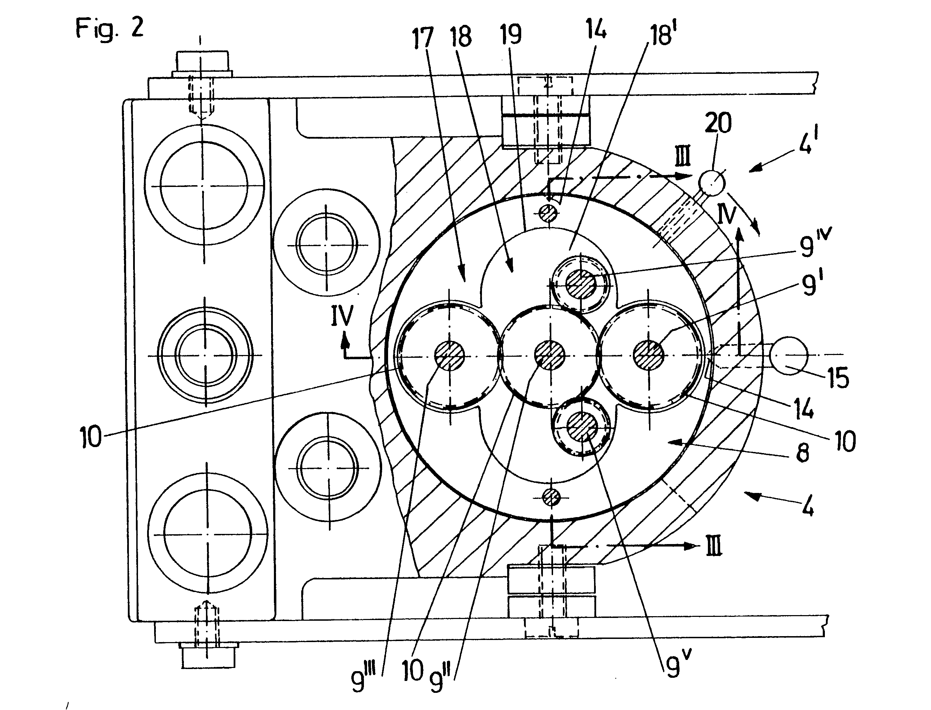

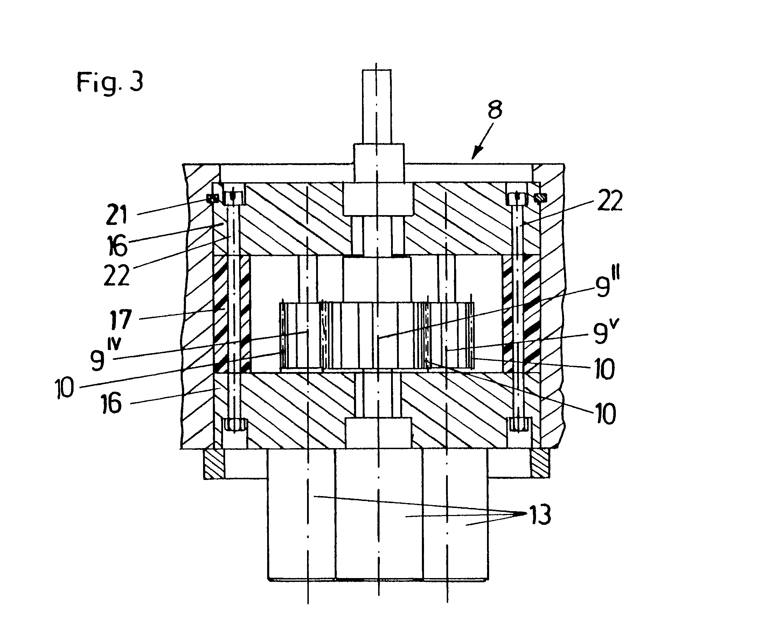

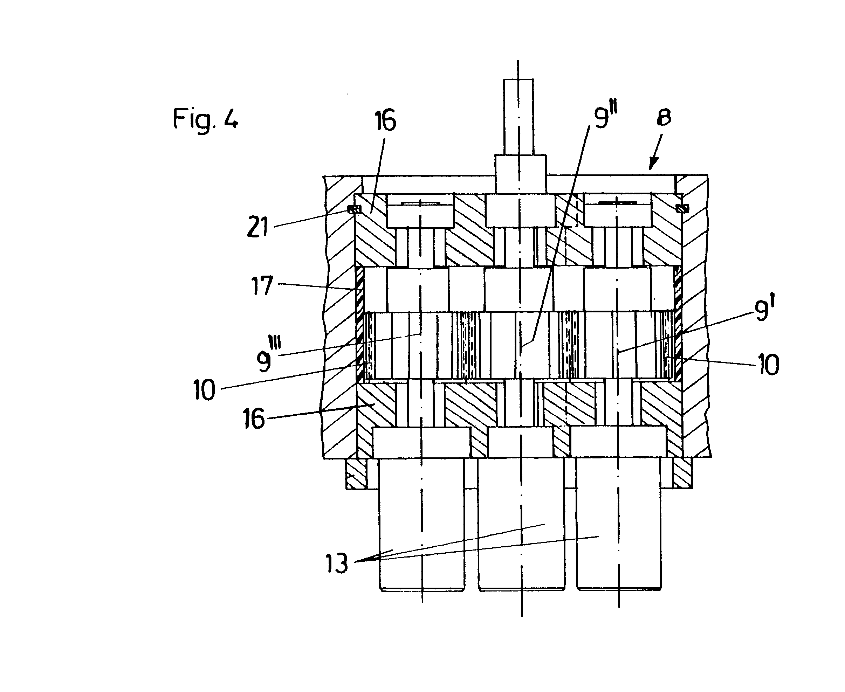

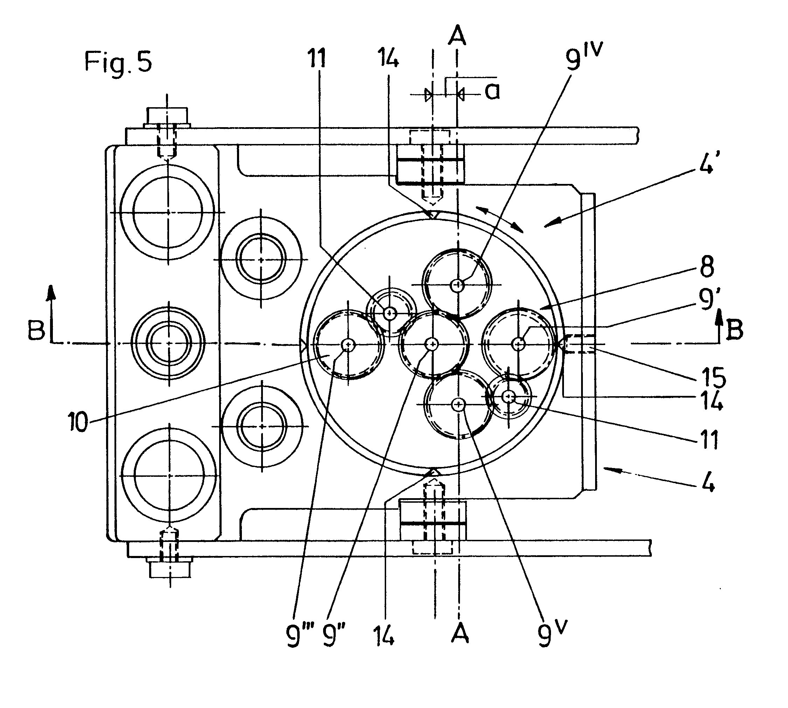

Die Fig 1 zeigt eine Seitenansicht einer erfindungsgemäßen Bohrmaschine, die Fig. 2 zeigt einen Draufsicht auf den Getriebeblock aus der Richtung des Pfeiles A der Fig. 1, wobei der Antriebsmotor der besseren Übersichtlichkeit halber weggelassen wurde, die Fig .3 zeigt einen Schnitt nach der Linie III-III der Fig. 2, die Fig. 4 zeigt einen Schnitt nach der Linie IV-IV der Fig. 2, und die Fig. 5 zeigt eine Ansicht analog der Fig. 2, bei einem weiteren Ausführungsbeispiel der Bohreranordnung.

Die erfindungsgemäße Bohrmaschine besteht aus dem Maschinenrahmen 1 mit zwei Führungssäulen 2, der Werkstückauflage 3, dem Getriebeblock 4 und dem Antriebsmotor 5.

Der Getriebeblock 4 und der Antriebsmotor 5 sind mittels eines bügelartigen Hebels 6 entgegen der Wirkung einer Zugfeder 7 zur Werkstückauflage 3 absenkbar.

Im Getriebeblock 4 befindet sich der zylinderförmige Bohrspindelträger 8, der um seine Längsmittelachse, d. h. um die Senkrechte im Getriebeblock 4 drehbar ist.

Im Bohrspindelträger 8 befinden sich die Bohrspindeln 9, die mit Ritzeln 10 versehen sind und über die Antriebswelle vom Antriebsmotor 5 angetrieben werden.

In die Kupplungsstücke 13 der Bohrspindeln 9 werden die Bohrer eingesetzt.

Wie aus den Fig. 2 und 5 ersichtlich, liegen drei Bohrspindeln 9', 9'', 9''' in einer Ebene B-B, die durch die Drehachse des Bohrspindelträgers 8 geht, und zwei Bohrspindeln 9$^{IV}$, 9$^{V}$ liegen in einer Ebene A-A, die senkrecht zur erstgenannten Ebene B-B ist und sich in einem Abstand a zur Drehachse des Bohrspindelträgers 8 befindet.

Anstelle eines üblichen Gehäuses weist der Bohrspindelträger 8 zwei Abdeckplatten 16 aus Zink und eine zwischen den Abdeckplatten 16 angeordnete Distanzscheibe 17 aus Kunststoff auf.

Die Distanzscheibe 17 ist mit einer Ausnehmung 18 versehen, durch die sich die Bohrspindeln 9 erstrecken und in denen die Ritzel 10, 11 angeordnet sind. Die Distanzscheibe 17 ersetzt ein herkömmliches Getriebegehäuse.

Die Ausnehmung 18 wird im Ausführungsbeispiel von vier Teilausnehmungen 18' gebildet, deren Ränder 19 in den Kreisbögen von vier Kreisen liegen, die sich schneiden.

An der Distanzscheibe 17 oder an einer Abdeckplatte 16 ist ein Hebel 20 befestigt, mittels dem der Bohrspindelträger 8 um 90° verdreht werden kann.

Das Paket aus Abdeckplatten 16 und Distanzscheibe 17 wird von Gewindebolzen 22 zusammengehalten.

Der Bohrspindelträger 8 ist an seinem Mantel mit zwei Einraststellen 14 versehen, in die wahlweise der Arretierbolzen eingreift, der im feststehenden Teil 4' des Getriebeblockes 4 gelagert ist. Mittels der Einraststellen 14 und des Arretierbolzens 15 kann der Bohrspindelträger 8 jeweils nachdem er mit dem Hebel 20 um 90° verdreht wurde, exakt arretiert werden.

In der in Fig. 2 gezeigten Stellung des Bohrspindelträgers 8 können beispielsweise mittels der Bohrspindeln 9'', 9$^{IV}$ und 9$^{V}$ und der zugehörigen Bohrer die Bohrungen für einen Scharniertopf gebohrt werden und mittels der Bohrspindeln 9', 9''' und der zugehörigen Bohrer die Bohrlöcher für eine Scharniermontageplatte. Wird der Bohrspindelträger 8 um 90° verdreht, können mit den Bohrern, die mit den Bohrspindeln 9', 9'', 9''' gekoppelt sind, die Bohrlöcher einer Systembohrreihe gebohrt werden.

Im Ausführungsbeispiel nach der Fig. 5 sind zwischen den Bohrspindeln 9', 9'', 9''' und 9$^{V}$ Ritzel 11 angeordnet.

**Patentansprüche**

1. Bohrmaschine für die Möbelherstellung zum Bohren von Bohrlöchern, zum Einsetzen von Dübeln, Scharniertöpfen u.dgl., mit einem Maschinenrahmen (1), an dem ein Antriebsmotor (5) und ein Getriebeblock (4) für mehrere Bohrspindeln (9) gelagert sind, sowie einer Vorschubeinrichtung, wobei im Getriebeblock (4) ein um eine Achse, die parallel zu den Achsen der Bohrspindeln (9) verläuft, drehbarer zylindrischer Bohrspindelträger (8) mit zentrischem Antriebsritzel gelagert ist, bei der der Bohrspindelträger (8) in den Getriebeblock (4) eingeschoben und mit einem Ring gesichert ist und wobei der Bohrspindelträger (8) an seinem Mantel von einem Arretierbolzen (15) im Getriebeblock (4) festlegbar ist, dadurch gekennzeichnet, daß im Bohrspindelträger (8) Bohrspindeln (9',9'',9''') in einer Spindelreihe sind, die in einer Axialebene des Bohrspindelträgers (8) liegen und Bohrspindeln (9$^{IV}$, 9$^{V}$) in einer zweiten Spindelreihe, die sich in einer Ebene befindet, die senkrecht zur ersten und im Abstand (a) von der Drehachse des Bohrspindelträgers (8) liegt und daß der Bohrspindelträger (8) an seinem Mantel mit mindestens zwei, vorzugsweise vier Einraststellen (14) versehen ist, die zueinander um 90° versetzt sind und in denen wahlweise der Arretierbolzen (15), der die Drehung des Bohrspindelträgers (8) verhindert, einrastet.

2. Bohrmaschine nach Anspruch 1, dadurch gekennzeichnet, daß der Bohrspindelträger (8) eine obere und eine untere Abdeckplatte (16) aufweist, zwischen denen eine Distanzscheibe (17) angeordnet ist, deren Breite der Höhe des Bohrspindelträgers und deren Durchmesser dem Durchmesser des Bohrspindelträgers (8) entspricht, und die mindestens eine Ausnehmung (18) aufweist, in der die Getrieberitzel (10, 11) angeordnet sind, wobei die Kontur der Ausnehmung (18) mindestens teilweise mit der Kontur eines oder mehrerer Getrieberitzel (10, 11) übereinstimmt.

3. Bohrmaschine nach Anspruch 2, dadurch gekennzeichnet, daß die Distanzscheibe (17) aus Kunststoff ist.

4. Bohrmaschine nach Anspruch 2, dadurch gekennzeichnet, daß die Kontur der Ausnehmung (18) von einander schneidenden Kreisen beschrieben wird.

5. Bohrmaschine nach Anspruch 2, dadurch gekennzeichnet, daß die beiden Abdeckplatten (16) mittels die Distanzscheibe (17) durchringender Gewindebolzen (22) miteinander verbunden sind.

6. Bohrmaschine nach Anspruch 2, dadurch gekennzeichnet, daß die Abdeckplatten (16) aus Zink sind.

7. Bohrmaschine nach Anspruch 2, dadurch gekennzeichnet, daß an einer Abdeckplatte (16) oder der Distanzscheibe (17) ein Hebel (20) befestigt ist, mittels dem der Bohrspindelträger (8) um seine Längsmittelachse im Getriebeblock (4) um 90° verdrehbar ist.

**Claims**

1. Drilling machine for the manufacture of furniture for drilling bore holes, for the insertion of dowels, hinge cups and the like, having a machine frame (1), on which are mounted a drive motor (5) and a gear block (4) for a plurality of drill spindles (9), and having a feeding device, a cylindrical drill spindle holder (8), which has a central driving pinion and which is rotatable about an axis which extends parallel to the axes of the drill spindles (9), being mounted in the gear block (4), the drill spindle holder (8) being pushed into the gear block (4) and secured with a ring and the drill spindle holder (8) being held in position in the gear block (4) by a stop bolt (15) on its casing, characterised in that in the drill spindle bolder (8) drill spindles (9', 9'', 9''') are arranged in a first spindle gang, which lies in an axial plane of the drill spindle holder (8), and drill spindles (9$^{VI}$, 9$^V$) are arranged in a second spindle gang which lies in a plane, which is perpendicular to the first plane and which is at a distance (a) from the axis of rotation of the drill spindle holder (8), and in that the drill spindle holder (8) is provided on its casing with at least two, preferably four locking points (14), which are displaced at an angle of 90° relative to one another and in which the stop bolt (15), which prevents the rotation of the drill spindle holder (8), optionally engages.

2. Drilling machine according to claim 1, characterised in that the drill spindle holder (8) comprises an upper and a lower cover plate (16), between which a spacing disc (17) is arranged, the width of which corresponds to the height of the drill spindle holder and the diameter of which corresponds to the diameter of the drill spindle holder (8), and which comprises at least one cutaway portion (18), in which the gear pinions (10, 11) are arranged, the contour of the cut-away portion (18) corresponding at least partially with the contour of one or more gear pinions (10, 11).

3. Drilling machine according to claim 2, characterised in that the spacing disc (17) is made of plastics material.

4. Drilling machine according to claim 2, characterised in that the contour of the cut-away portion (18) is described by circles which intersect one another.

5. Drilling machine according to claim 2, characterised in that the two cover plates (16) are connected to one another by means of threaded bolts (22) which penetrate the spacing disc (17).

6. Drilling machine according to claim 2, characterised in that the cover plates (16) are made of zinc.

7. Drilling machine according to claim 2, characterised in that a lever (20) is mounted on one cover plate (16) or on the spacing disc (17), by means of which lever the drill spindle holder (8) can be rotated in the gear block (4) through 90° about its longitudinal central axis.

**Revendications**

1. Perceuse utilisée pour la fabrication de mobilier pour percer des trous, poser des chevilles, des cavités à charnière, etc., munie d'un bâti (1) dans lequel sont logés un moteur de commande (5) et un bloc d'engrenage (4) pour plusieurs broches de perçage (9), ainsi qu'un mécanisme d'avance, un porteur de broches de perçage (8) cylindrique rotatif, à pignon d'attaque central et tournant autour d'un axe parallèle aux axes des broches de perçage (9), étant introduit dans le bloc d'engrenage (4) et bloqué par une bague, ce porteur de broches de perçage (8) pouvant être fixé dans le bloc d'engrenage (4) à son enveloppe par un boulon d'arrêt (15), caractérisée en ce que des broches de perçage (9', 9'', 9''') sont disposées dans le porteur de broches de perçage (8) sur une ligne située dans un plan axial du porteur de broches de perçage (8) et des broches de perçage (9$^{IV}$, 9$^V$) sont situées sur une deuxième ligne dans un plan perpendiculaire au premier et à une distance (a) de l'axe de rotation du porteur de broches de perçage (8), et en ce que le porteur de broches de perçage (8) est muni d'au moins deux, de préférence quatre points d'enclenchement (14) sur son enveloppe, à 90° les uns des autres et dans n'importe lequel s'enclenche le bouton d'arrêt (15) qui empêche la rotation du porteur de broches de perçage (8).

2. Perceuse selon la revendication 1, caractérisée en ce que le porteur de broches de perçage (8) présente deux plaques de recouvrement, une supérieure et une inférieure, (16), entre lesquelles est placée une rondelle d'espacement (17) dont la largeur correspond à la hauteur du porteur de broches de perçage (8) et dont le diamètre correspond au diamètre du porteur de broches de perçage (8), et qui présente au moins un creux (18) dans lequel sont placés deux pignons d'entraînement (10, 11), le contour du creux (18) correspondant au moins en partie au contour d'un ou plusieurs des pignons d'entraînement (10, 11).

3. Perceuse selon la revendication 2, caractérisée en ce que la rondelle d'espacement (17) est en matière plastique.

4. Perceuse selon la revendication 2, caractérisée en ce que le contour du creux (18) est décrit par des cercles sécants.

5. Perceuse selon la revendication 2, caractérisée en ce que les deux plaques de recouvrement (16) sont reliées entre elles par des boulons filetés (22) à travers la rondelle d'espacement (17).

6. Perceuse selon la revendication 2, caractérisée en ce que les plaques de recouvrement (16) sont en zinc.

7. Perceuse selon la revendication 2, caractérisée en ce qu'un levier (20), au moyen duquel le porteur de broches de perçage peut pivoter de 90° autour de son axe médian longitudinal dans le bloc d'engrenage, est fixé sur une plaque de recouvrement (16) ou sur la rondelle d'espacement (17).

Fig. 1

Fig. 2

17 18 19 14 18'

20 4'

III

IV

9ᴵⱽ

9'

IV

15

10

14

10

8

10

4

III

9ᴵᴵᴵ 10 9ᴵᴵ 9ⱽ

0 154 790

Fig. 3

0 154 790

Fig. 4

0 154 790

Fig. 5

0 154 790